# EUROPEAN PATENT SPECIFICATION

(11) **EP 2 261 153 B1**
(45) Date of publication and mention of the grant of the patent: **21.01.2015**
(21) Application number: 10165767.4
(22) Date of filing: 11.06.2010
(51) Int. Cl.: B65H 31/30, B43M 3/04, F16D 48/06

(54) **Transport Apparatus**
Transportvorrichtung
Appareil de transport

(30) Priority: 12.06.2009 GB 0910140
(43) Date of publication of application: 15.12.2010
(73) Proprietor: Neopost Technologies, 92220 Bagneux (FR)
(72) Inventor: Smith, Damon, Loughton,, Essex IG10 3DJ (GB)
(74) Representative: David, Alain

(56) References cited:
- EP-A2- 2 014 590
- WO-A1-02/26508
- WO-A1-98/17554
- GB-A- 691 027
- GB-A- 1 544 572
- US-A- 4 029 194
- US-A- 4 169 341
- US-A1- 2004 178 561
- US-B1- 6 283 276

## Description

The present invention relates to apparatus for transporting documents in a paper handling apparatus.

Documents such as sheets or stacks of paper are typically transported between separate modules of a paper handling apparatus, such as a mailing machine. For example they may be transported from storage hoppers to a collating station, where a pack of multiple sheets and other items may be assembled into a pack, and subsequently to an inserting station where the pack is pushed into an envelope. This transport is typically done by pushing using a pawl mounted on a drive train as illustrated in WO98/17554 or US6 283 276 for example.

It is desirable that such apparatus be capable of handling a variety of sizes and weights of packs without damage occurring to the mechanisms even if a paper jam occurs. In a known such apparatus, marketed as under the trade mark MaxiMailer™ by PFE International Limited, this was achieved by allowing the pawl to be pushed backwards if a force above a predetermined one is applied to it and making the drive train flexible so that it is not damaged itself. However this arrangement can only cope with relatively low loads and there is a need for apparatus which will handle much heavier loads for which the pawl must be fixed and not be allowed to move from its upright position.

According to the invention there is provided apparatus for transporting documents in a paper handling system, the apparatus comprising: a flexible drive train comprising a plurality of chain links; a document transport element connected to the drive train for moving documents; and means for constraining the flexible drive train to move along a predetermined serial path, the transport element comprising a pawl extending orthogonal to the drive train and a pawl support member extending rearwardly in the direction of travel of the drive train and overlying the drive train to restrain movement of the drive train out of the predetermined path, the apparatus being characterized in that the support member has a base length extending over more than two chain links and is angled to cover the width of the chain.

The flexible drive chain may be driven by an electromagnetic friction clutch which transmits a torque when a DC voltage is applied to it. Preferably the torque is proportioned to the voltage applied.

Advantageously the apparatus comprises means adapted to generate a predetermined torque when the transport element is not loaded and to apply a reduced torque a predetermined time after the transport element engages a document to be moved.

Preferably the apparatus comprises means adapted to apply a relatively high voltage element to generate a high torque when the transport element is not loaded and to reduce the voltage and thus the torque a predetermined time after the transport element engages a document to be moved.

### Brief description of the drawings

For a better understanding of the present invention and to show how the same may be carried into effect, reference will now be made to the accompanying drawings, in which:
Figure 1 is a schematic side view of a prior art apparatus;
Figure 2 is a schematic side view of the apparatus of Figure 1 in the event of a paper jam;
Figure 3 is a schematic side view of part of the apparatus according to the invention;
Figure 4 is a schematic side view of the apparatus of Figure 3 in the event of a paper jam;
Figure 5 is a top plan view of the apparatus according to the invention;
Figure 6 is a side view of the apparatus of Figure 5;
Figure 7 is an enlarged top plan view of part of the apparatus of Figures 5 and 6;
Figure 8 is an enlarged side view of part of the apparatus of Figures 5 and 6;
Figure 9 is a cross sectional view of the part of Figures 7 and 8.

### Detailed description of the invention

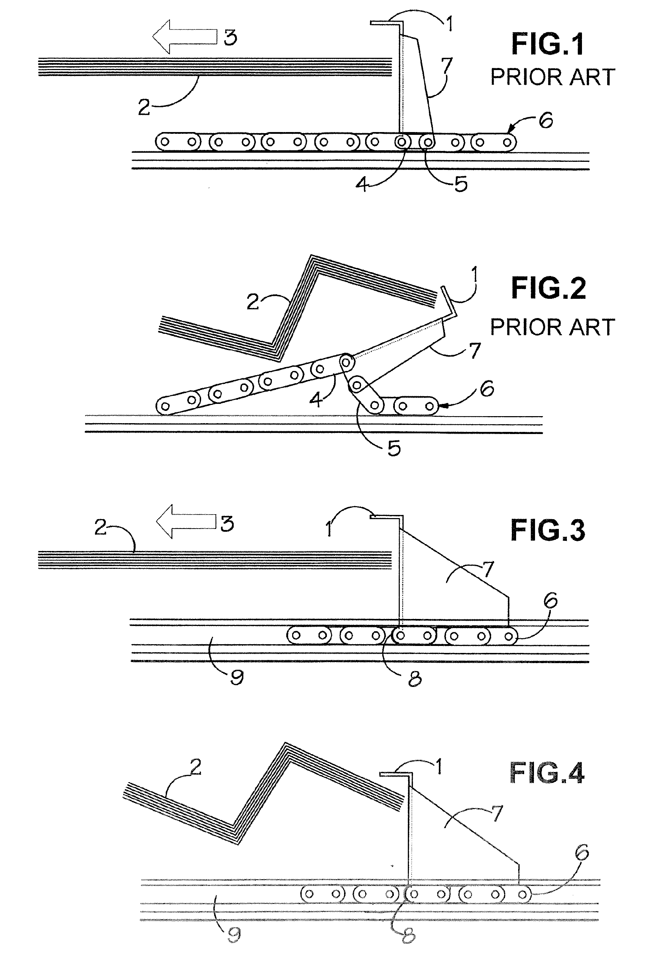

In a conventional apparatus for transporting documents, as illustrated in Figure 1, a pawl 1 pushes a document pack 2 in the direction of arrow 3. The pawl 1 is connected between two adjacent links 4 and 5 of a chain 6 which forms the drive train for the pawl 1. The pawl has a backwardly extending support portion 7 for extra stability and strength.

Figure 2 illustrates the situation if there is a paper jam in the apparatus such that resistance is encountered to movement of the document pack 2. As can be seen the drive train continues to try to move forward in the direction of arrow 3 causing the document pack 2 to buckle. The reaction force causes the pawl 1 to bend over backwards which releases the force on the main driving mechanism. The drive train 6 buckles as the pawl 1 is pushed backwards.

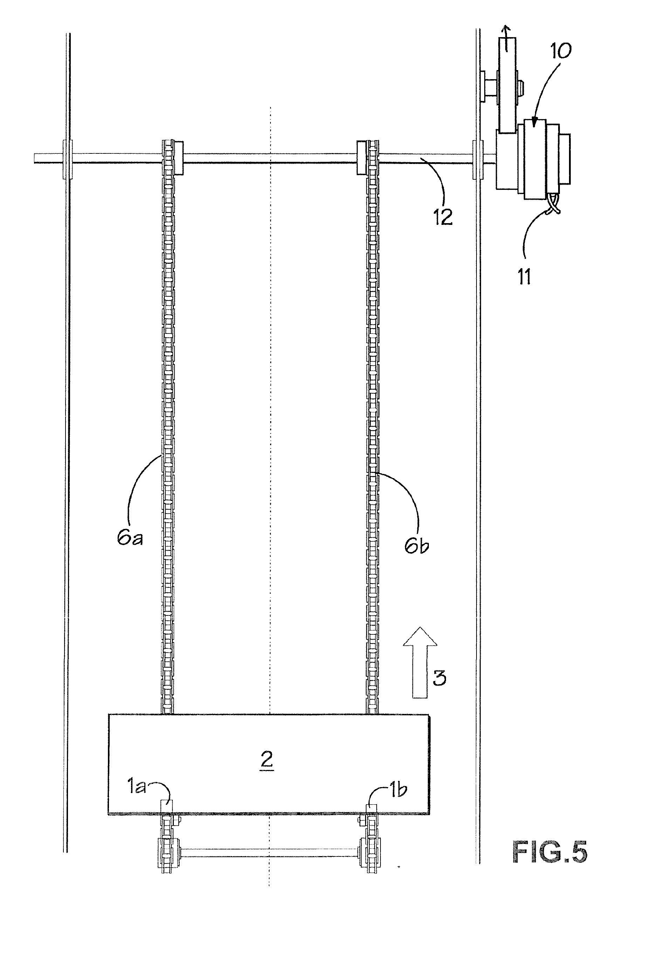

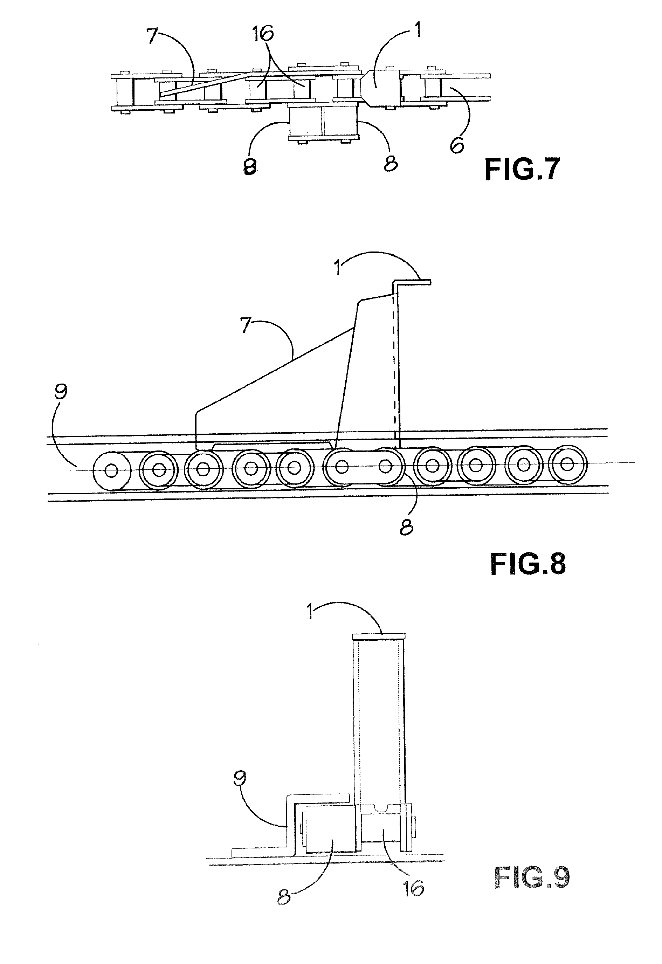

In Figures 4 and 5 apparatus according to the invention is illustrated and again a pawl 1 drives a document pack 2 in the direction of arrow 3 via chain link drive 6. However, in contrast to the prior art example, the pawl 1 has a much longer backwardly extending portion 7 which extends over more than two chain links in this example, but could be more. As can be seen in Figure 7, the background portion 7 rests over the top of the chain 6 and is angled to cover the width of the chain.

This longer extension to the pawl 7 strengthens the pawl and allows it to push larger document stacks and more weight without itself being pushed over. It also will not easily be pushed over when there is a paper jam as shown in Figure 4. This is because rollers 8 are attached to the chain link and are constrained in a guide channel 9 so that the chain cannot buckle. The rollers are illustrated more clearly in Figures 7 to 9 described later.

Figure 5 shows document pack 2 being pushed in the direction of arrow 3 by two pawls 1a and 1b on parallel guide chains 6a, 6b. The chains 6a, 6b are driven by an electromagnetic friction clutch 10 which transmits a torque when a DC voltage is applied to it. The torque is related to the value of the DC voltage applied via wires 11. For inserting document packs in envelopes it is preferable to use a voltage such that the maximum possible torque is transmitted from the clutch.

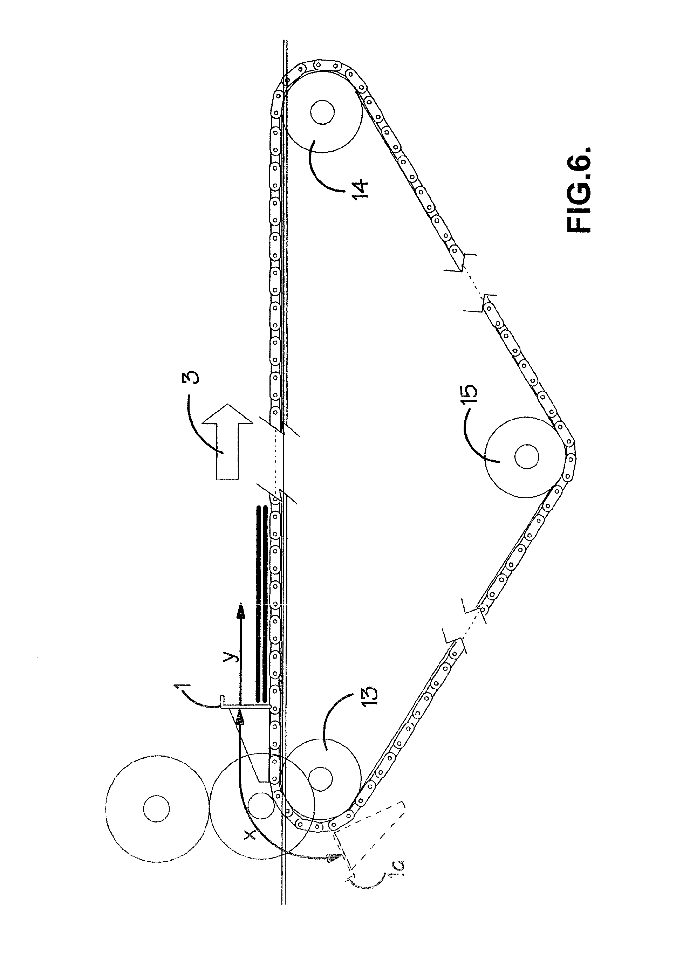

The friction clutch 10 drives rod 12 which is connected to the two chain link drive trains 6a and 6b, to drive them around pulley wheels as shown more clearly in Figure 6.

The drive chains 6a and 6b are connected to three pulley wheels 13, 14 and 15. The pawl rest position is shown at 1c adjacent pulley wheel 13.

The insert pawl is driven from rest position 1c through a distance x to position 1 to pick up the document pack 2 which it has to move. The clutch torque is kept at its maximum through the distance x so that the system can overcome the sudden increase in inertia at the point where the pawls start to drive the mass of the document pack 2.

After distance x the DC voltage to the friction clutch 10 is reduced over the distance y. This lowers the torque that can be transmitted by the clutch but is sufficient to continue to drive the pack 2. If a paper jam occurs and the system becomes loaded beyond the torque provided by the clutch then the drive armature of the clutch slips. Hence the main drive mechanism is isolated and will not be damaged if a jam occurs.

Figures 7 to 9 illustrate more clearly the connection of the pawl 1 to the drive chain 6. In the region directly behind the pawl 1, two chain spindles 16 are elongated and have rollers 8 mounted on them outside the line of the chain 6 itself. These rollers 8 move in and are constrained by a guide channel 9. This ensures that the pawl remains upright regardless of the force acting on it.

The insert pawl 1 and its associated drive chain 6 could be replaced by flighted timing belts, rollers or shafts to push or otherwise transport the documents.

## Claims

1. Apparatus for transporting documents in a paper handling system, the apparatus comprising: a flexible drive train (6) comprising a plurality of chain links; a document transport element connected to the drive train (6) for moving documents; and means for constraining the flexible drive train (6) to move along a predetermined serial path, the transport element comprising a pawl (1) extending orthogonal to the drive train and a pawl support member (7) extending rearwardly in the direction of travel of the drive train (6) and overlying the drive train to restrain movement of the drive train out of the predetermined path, the apparatus being **characterized in that** the support member (7) has a base length extending over more than two chain links and is angled to cover the width of the chain.

2. Apparatus according to claim 1, further comprising at least one roller (8) connected to the drive train and constrained for uni-dimensional movement within a guide channel (9).

3. Apparatus according to claim 2, wherein the roller (8) is mounted adjacent and parallel to the drive train (6).

4. Apparatus according to claim 1, comprising an electromagnetic friction clutch (10) to drive the flexible drive train (6).

5. Apparatus according to claim 4, wherein the clutch (10) transmits a torque when a DC voltage is applied to it.

6. Apparatus according to claim 5, wherein the torque is related to the voltage applied.

7. Apparatus according to claim 1, comprising means adapted to generate a predetermined torque when the transport element is not loaded and to apply a reduced torque a predetermined time after the transport element engages a document to be moved.

8. Apparatus according to claim 7, comprising means adapted to apply a relatively high voltage element to generate a high torque when the transport element is not loaded and to reduce the voltage and thus the torque a predetermined time after the transport element engages a document to be moved.

## Patentansprüche

1. Vorrichtung zum Transportieren von Dokumenten in einem Papierbearbeitungssystem, wobei die Vorrichtung umfasst: einen flexiblen Antriebsstrang (6) umfassend mehrere Kettenglieder, ein mit dem Antriebsstrang (6) verbundenes Dokumententransportelement zum Bewegen von Dokumenten und Mittel zum Beschränken des flexiblen Antriebsstranges (6), damit sich dieser entlang eines vorbestimmten Fortsetzungsweges bewegt, wobei das Transportelement eine Klinke (1), die sich senkrecht zum Antriebsstrang erstreckt, und ein Klinkenstützelement (7) umfasst, das sich rückwärts zur Bewegungsrichtung des Antriebsstranges (6) erstreckt und das dem Antriebsstrang überliegt, um eine Bewegung des Antriebsstranges außerhalb des vorbestimmten Weges zu verhindern, wobei die Vorrichtung **dadurch gekennzeichnet ist, dass** das Stützelement (7) eine Basislänge aufweist, die sich über mehr als zwei Kettenglieder erstreckt, und das so gewinkelt ist, dass es die Breite der Kette bedeckt.

2. Vorrichtung nach Anspruch 1, ferner umfassend wenigstens eine Rolle (8), die mit dem Antriebsstrang verbunden ist und die auf eine eindimensionale Bewegung innerhalb eines Führungskanals (9) beschränkt ist.

3. Vorrichtung nach Anspruch 2, wobei die Rolle (8) benachbart und parallel zum Antriebsstrang (6) angebracht ist,

4. Vorrichtung nach Anspruch 1, umfassend eine elektromagnetische Reibungskupplung (10), um den flexiblen Antriebsstrang (6) anzutreiben.

5. Vorrichtung nach Anspruch 4, wobei die Kupplung (10) ein Drehmoment überträgt, wenn eine Gleichstromspannung an sie angelegt wird.

6. Vorrichtung nach Anspruch 5, wobei sich das Drehmoment auf die angelegte Spannung bezieht.

7. Vorrichtung nach Anspruch 1, umfassend Mittel, die dazu angepasst sind, ein vorbestimmtes Drehmoment zu erzeugen, wenn das Transportelement nicht beladen ist, und ein reduziertes Drehmoment eine vorbestimmte Zeit, nachdem das Transportelement ein zu bewegendes Dokument gegriffen hat, anzuwenden.

8. Vorrichtung nach Anspruch 7, umfassend Mittel, die dazu angepasst sind, ein relativ hohes Spannungselement anzuwenden, um ein hohes Drehmoment zu erzeugen, wenn das Transportelement nicht beladen ist, und die Spannung und damit das Drehmoment eine vorbestimmte Zeit, nachdem das Transportelement ein zu bewegendes Dokument gegriffen hat, zu reduzieren.

## Revendications

1. Appareil pour transporter des documents dans un système de traitement de papier, l'appareil comprenant:
un train d'entraînement flexible (6) comprenant une pluralité de de maillons de chaîne;
un élément de transport de document relié au train d'entrainement flexible (6) pour transporter les documents; et
des moyens pour contraindre le train d'entraînement (6) à se déplacer le long d'un chemin en série prédéterminé, l'élément de transport comprenant un cliquet (1) se prolongeant orthogonalement au train d'entrainement et un élément de support de cliquet (7) se prolongeant en arrière dans une direction de transport du train d'entrainement (6) et recouvrant le train d'entraînement pour en limiter le mouvement hors du chemin prédéterminé, l'appareil étant **caractérisé en ce que** l'élément de support (7) a une longueur de base étendant sur au moins deux maillons de chaîne et est incliné pour couvrir la largeur de la chaine.

2. Appareil selon la revendication 1, comprenant en outre au moins un rouleau (8) relié au train d'entrainement et contraint à un mouvement unidimensionnel dans un canal de guidage (9).

3. Appareil selon la revendication 2, dans lequel le rouleau (8) est monté de façon adjacente et parallèle au train d'entrainement.

4. Appareil selon la revendication 1, comprenant un embrayage à friction électromagnétique (10) pour entraîner le train d'entraînement flexible (6).

5. Appareil selon la revendication 4, dans lequel l'embrayage (10) transmet un couple lorsqu'une tension continue lui est appliquée.

6. Appareil selon la revendication 5, dans lequel le couple est lié à la tension appliquée.

7. Appareil selon la revendication 1, comprenant des moyens adaptés pour générer un couple prédéterminé lorsque l'élément de transport n'a pas été chargé et pour appliquer un couple réduit un temps prédéterminé après que l'élément de transport a engagé un document qui doit être déplacé.

8. Appareil selon la revendication 7, comprenant des moyens adaptés pour appliquer un élément de tension relativement élevée pour générer un couple élevé lorsque l'élément de transport n'a pas été chargé et pour réduire la tension et donc le couple un temps prédéterminé après que l'élément de transport a engagé un document qui doit être déplacé.
